# EUROPEAN PATENT SPECIFICATION

(11) **EP 3 000 995 B1**
(45) Date of publication and mention of the grant of the patent: **23.11.2016**
(21) Application number: 14186767.1
(22) Date of filing: 29.09.2014
(51) Int. Cl.: F01L 1/047

(54) **Timing wheel assembly for a concentric camshaft**
Geberradanordnung für konzentrische Nockenwelle
Ensemble roue de synchronisation pour un arbre à cames concentrique

(43) Date of publication of application: 30.03.2016
(73) Proprietor: Mechadyne International Limited, Kirtlington Oxfordshire OX5 3JQ (GB)
(72) Inventor: Methley, Ian, Witney, Oxfordshire OX29 8JL (GB); Lancefield, Timothy Mark, Shipston on Stour, Oxfordshire CV36 5LZ (GB)
(74) Representative: Harrison IP Limited

(56) References cited:
- DE-A1-102009 014 517
- DE-A1-102011 121 860
- GB-A- 2 467 333
- US-A1- 2011 061 614

## Description

### Field of the invention

The present invention provides is concerned with providing a timing feedback signal for a concentric camshaft system.

### Background of the invention

Any phasing system that allows the timing of one or more groups of cam lobes to the crankshaft to be varied requires a position feedback signal to allow the engine management system (EMS) to know the instantaneous timing of the cam lobes whilst the engine is running. This feedback is normally achieved by using a Hall Effect sensor and a toothed timing wheel rotating in synchronisation with the cam lobes to provide a pulse train that can be combined with a similar pulse train from a crankshaft angle sensor to determine the instantaneous cam lobe angle.

In conventional one-piece or solid camshaft systems, having a camshaft phaser to rotate the all the cam lobes in unison relative to the crankshaft there are two solutions employed for mounting the toothed timing wheel, namely:
1. As described in US 7,305,949. the timing wheel can be fitted to the camshaft phaser such that it rotates with the rotor of the phaser whilst the stator is driven by the crankshaft, and
2. The timing wheel may be fitted to the camshaft, either at one end or between two cam lobes.

In the case of a concentric camshaft system, it is important to be able to measure the phase of the cam lobes connected to the inner drive shaft of the camshaft. This can still be achieved by timing features mounted to the camshaft phaser, as shown in GB 2479291. Alternatively, a timing wheel may be fitted to the camshaft (see US 2011/0061614). In the latter case, however, a timing wheel is required that is connected for rotation with the inner drive shaft, a timing wheel connected for rotation with the outer tube not being able to provide timing information for the cam lobes connected to the drive shaft.

There are a number of different options already known for connecting a timing wheel to the inner drive shaft of a concentric camshaft, namely:
- Fixing the timing wheel to the opposite end of the shaft to the phaser (as known from US 2011/0061614).
- Fitting a sliding timing wheel to the outside of the camshaft tube and connecting it to the inner drive shaft via a drive pin.
- Adding timing wheel features to one of the cam lobes that are connected for rotation with the inner drive shaft.

Adding timing wheel features to one of the cam lobes connected to the inner drive shaft is in most respects the best method of providing a timing wheel on a concentric camshaft, as it offers the following advantages, namely:
- No additional fixing bolts or connecting pins are required,
- There is more flexibility of location to suit a convenient sensor position in the cylinder head,
- No additional sliding components on the camshaft are required with their associated friction, and
- The tolerance between cam lobe angle and timing wheel angle is minimised.

However, there are also some disadvantages, namely:
- One cam lobe is of a unique and much more complicated design
- Machining the timing wheel features onto a cam lobe component is expensive, and
- Cost effective manufacturing processes applicable to cam lobes (e.g. sintering or forging of blanks) are not easily applicable to a combined cam lobe & timing wheel component.

### Summary of the invention

According to the present invention, there is provided a camshaft assembly comprising an inner shaft, an outer tube surrounding and rotatable relative to the inner shaft, and two groups of cam lobes mounted on the outer tube, the first group of cam lobes being fast in rotation with the outer tube, the second group being rotatably mounted on the outer surface of the outer tube and connected for rotation with the inner shaft and a timing wheel connected for rotation with the inner shaft to provide position information to a sensor wherein the timing wheel is formed as a separate part that is assembled to one of the cam lobes in the second group.

The cam lobe to which the timing wheel is assembled may be identical to at least one other cam lobe in the second group.

In some embodiments, the timing wheel may be a stamped sheet metal component while in other embodiments it may be a sintered component.

The timing wheel may be joined to the cam lobe by a welding process such as resistance welding, friction welding, or laser welding.

Alternatively, the timing wheel may be a press fit on to a cylindrical feature of the cam lobe.

In some embodiments, the timing wheel may be located concentrically on the cam lobe and its angle defined by a connecting pin that connects the cam lobe for rotation with the inner drive shaft.

Alternatively, the timing wheel may be assembled to the cam lobe and then deformed in order to retain it in the correct position relative to the cam lobe.

It is known that stamped sheet metal and sintering are a very accurate and cost effective method of producing timing wheels. The invention provides a combined cam lobe and timing wheel by joining a stamped or sintered timing wheel to a machined cam lobe. In this way all of the sliding cam lobes on the concentric camshaft assembly can be identical up to the point when the timing wheel is assembled onto one of the cam lobes.

### Brief description of the drawings

The invention will now be described further, by way of example with reference to the accompanying drawings, in which:
Figures 1 and 2 are sectional and perspective views, respectively, of part of a camshaft assembly of a first embodiment of the invention,
Figure 3 is a view similar to Figure 1 of part of a camshaft assembly of a second embodiment of the invention,
Figure 4 is a perspective view of the timing wheel of the embodiment shown in Figure 4,
Figures 5 and 6 are views similar to Figures 1 and 2 of part of a camshaft assembly of a third embodiment of the invention, and
Figures 7 and 8 are views similar to Figures 1 and 2 of part of a camshaft assembly of a fourth embodiment of the invention.

### Detailed description of the drawings

### First embodiment

A "concentric camshaft" is an assembly that comprises an inner shaft, an outer tube surrounding and rotatable relative to the inner shaft, and two groups of cam lobes mounted on the outer tube. The first group of cam lobes is fast in rotation with the outer tube, while the second group, herein termed sliding cam lobes, are rotatably mounted on the outer surface of the tube and are connected for rotation with the inner shaft.

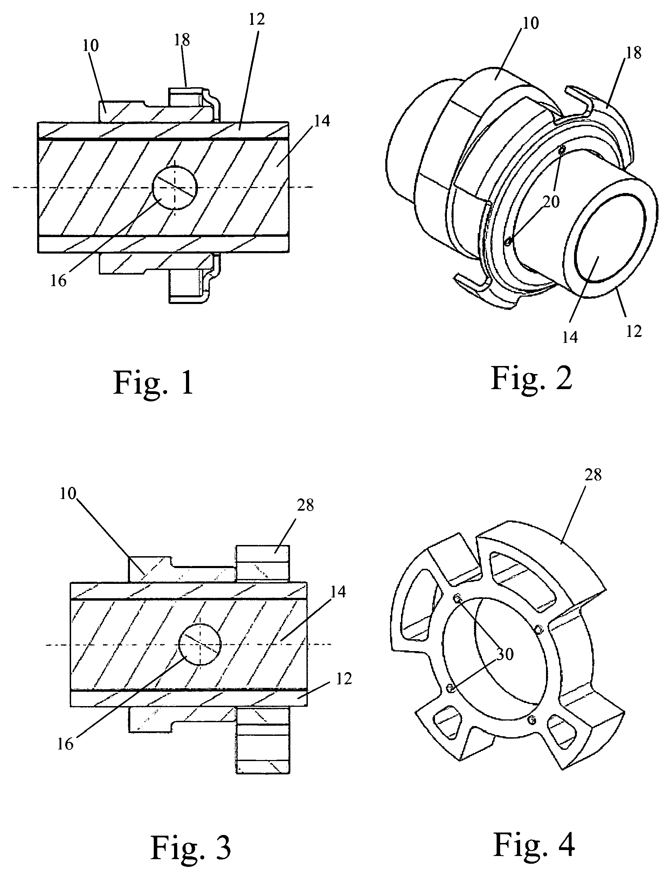

In Figures 1 and 2, there is shown one of the sliding cam lobes 10 rotatably supports on the outer tube 12 of the concentric camshaft and connected for rotation with the inner shaft 14 of the concentric camshaft by a pin 16 that passes through a tangentially elongated slot (not shown) formed in the outer tube 12. A timing wheel 18 formed as a stamped sheet metal component separate from the cam lobe has a number of small features 20 to allow projection welding onto the end of the cam lobe.

### Second Embodiment

The second embodiment shown in Figures 3 and 4 is similar to the first and like parts have been allocated like reference numerals. The essential difference from the first embodiment is that the timing wheel 28 is sintered and is formed with small protrusions 30 to allow it to be projection welded in place on the cam lobe 10.

### Third Embodiment

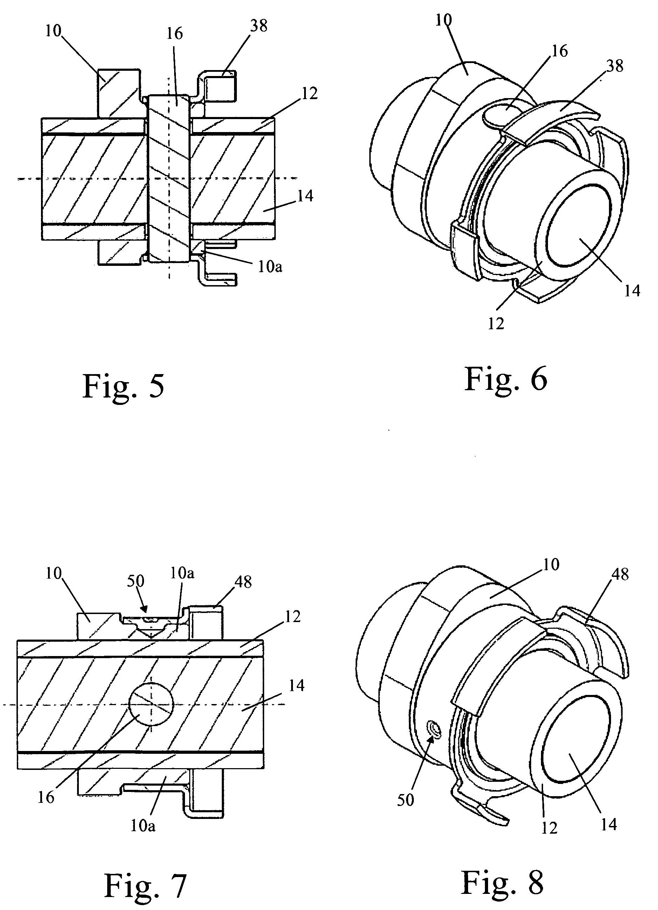

The third embodiment, shown in Figures 5 and 6, has a timing wheel 38 that is engaged on the cylindrical collar 10a of the cam lobe 10 and its correct angular position is preferably guaranteed by arranging for the connecting pin 16 to pass through both the cam lobe collar 10a and the timing wheel 38. It would also be possible just to rely on an interference fit to maintain the angle of the timing wheel and provide a clearance hole through which the connecting pin could be fitted.

### Fourth Embodiment

The fourth embodiment, shown in Figures 7 and 8, is similar to the third in that it has a timing wheel 48 that is engaged on the cylindrical collar 10a of the cam lobe 10. However, instead of using the connecting pin 16 to fix the timing wheel 48 in position, a staking operation shown at 50 in Figures 7 and 8 is used. In the staking operation, after the timing wheel 48 has been fitted to the collar 10a, it is deformed to engage with one or more slot or hole features in the cam lobe, in order to lock its position. The timing wheel 48 can either have clearance holes for the cam lobe connecting pin 16 to pass through or it can be staked to the cam lobe 10 after the connecting pin 16 has been fitted through the cam lobe 10 and the inner shaft 14.

## Claims

1. A camshaft assembly comprising an inner shaft (14), an outer tube (12) surrounding and rotatable relative to the inner shaft (14), and two groups of cam lobes mounted on the outer tube (12), the first group of cam lobes being fast in rotation with the outer tube, the second group (10) being rotatably mounted on the outer surface of the outer tube (12) and connected for rotation with the inner shaft (14) and a timing wheel (18,28,38,48) connected for rotation with the inner shaft (14) to provide position information to a sensor, **characterised in that** the timing wheel (18,28,38,48) is formed as separate part that is assembled to one of the cam lobes (10) in the second group.

2. A camshaft as claimed in claim 1, wherein the cam lobe (10) to which the timing wheel (18,28,38,48) is assembled is identical to at least one other cam lobe in the second group.

3. A camshaft as claimed in claim 1 or 2, wherein the timing wheel (18,38,48) is a stamped sheet metal part.

4. A camshaft as claimed in claim 1 or 2, wherein the timing wheel (28) is a sintered part.

5. A camshaft as claimed in claim 3 or 4, wherein the timing wheel (18,28,38,48) is joined to the cam lobe by a welding process.

6. A camshaft as claimed in claim 3 or 4, wherein timing wheel (38,48) is a press fit on to a cylindrical feature (10a) of the cam lobe (10).

7. A camshaft as claimed in claim 3 or 4, wherein timing wheel (38) is located concentrically on the cam lobe (10) and its angular position relative to the cam lobe (10) is defined by a connecting pin (16) that connects the cam lobe (10) for rotation with the inner drive shaft (14).

8. A camshaft as claimed in claim 3, wherein the timing wheel (48) is assembled to the cam lobe (10) and then deformed in order to retain it in the correct position relative to the cam lobe (10).

## Patentansprüche

1. Nockenwellen-Anordnung, bestehend aus einer Innenwelle (14), einem Außenrohr (12), das die Innenwelle (14) umschließt und um diese drehbar ist, und zwei Nockengruppen, die am Außenrohr (12) angebracht sind, wobei sich die erste Nockengruppe zusammen mit dem Außenrohr schnell dreht, und die zweite Gruppe (10) drehbar auf der Außenfläche des Außenrohres (12) angebracht ist und zur Drehung mit der Innenwelle (14) verbunden ist, sowie einem Steuerrad (18, 28, 38, 48), das zur Drehung mit der Innenwelle (14) verbunden ist, um Positionsdaten an einen Sensor zu übermitteln, **dadurch gekennzeichnet, dass** das Steuerrad (18, 28, 38, 48) eine separate Baugruppe bildet, die an eine der Nocken (10) der zweiten Gruppe montiert ist.

2. Nockenwelle nach Anspruch 1, wobei der Nocken (10), an dem das Steuerrad (18, 28, 38, 48) montiert ist, mit mindestens einem anderen Nocken der zweiten Gruppe identisch ist.

3. Nockenwelle nach Anspruch 1 oder 2, wobei das Steuerrad (18, 38, 48) aus gestanztem Blech besteht.

4. Nockenwelle nach Anspruch 1 oder 2, wobei das Steuerrad (28) ein Sinterteil ist.

5. Nockenwelle nach Anspruch 3 oder 4, wobei das Steuerrad (18, 28, 38, 48) an dem Nocken angeschweißt ist.

6. Nockenwelle nach Anspruch 3 oder 4, wobei das Steuerrad (38, 48) mittels Presssitz an einem zylinderförmigen Teil (10a) des Nocken (10) angebracht ist.

7. Nockenwelle nach Anspruch 3 oder 4, wobei das Steuerrad (38) konzentrisch auf dem Nocken (10) angeordnet ist und dessen Winkelposition bezüglich des Nockens (10) durch einen Verbindungsbolzen (16) festgelegt wird, der den Nocken (10) zur Drehung mit der Innenwelle verbindet (14).

8. Nockenwelle nach Anspruch 3, wobei das Steuerrad (48) am Nocken (10) angebracht ist und dann verformt wird, damit es in der richtigen Position bezüglich des Nockens (10) bleibt.

## Revendications

1. Ensemble d'arbre à cames, composé d'un arbre intérieur (14), d'un tube extérieur (12) entourant l'arbre intérieur (14) et tournant relativement à celui-ci, et de deux groupes de lobes de cames montés sur le tube extérieur (12), le premier groupe de lobes de cames étant en rotation rapide avec le tube extérieur, le deuxième groupe (10) étant monté en rotation sur la surface extérieure du tube extérieur (12) et connecté pour la rotation avec l'arbre intérieur (14), et une roue de synchronisation (18,28,38,48) connectée pour la rotation avec l'arbre intérieur (14) afin de fournir des informations sur la position à un capteur, **caractérisé en ce que** la roue de synchronisation (18,28,38,48) est formée comme une pièce distincte assemblée sur un des lobes de cames (10) dans le deuxième groupe.

2. Arbre à cames selon la revendication 1, le lobe de came (10) sur lequel la roue de synchronisation (18,28,38,48) est assemblée étant identique à au moins un autre lobe de came du deuxième groupe.

3. Arbre à cames selon la revendication 1 ou 2, la roue de synchronisation (18,38,48) étant une pièce en tôle estampée.

4. Arbre à cames selon la revendication 1 ou 2, la roue de synchronisation (28) étant une pièce frittée.

5. Arbre à cames selon la revendication 3 ou 4, la roue de synchronisation (18,28,38,48) étant jointe au lobe de came par un procédé de soudage.

6. Arbre à cames selon la revendication 3 ou 4, la roue de synchronisation (38,48) étant ajustée par pression sur un élément cylindrique (10a) du lobe de came (10).

7. Arbre à cames selon la revendication 3 ou 4, la roue de synchronisation (38) étant montée de façon concentrique sur le lobe de came (10), sa position angulaire relative au lobe de came (10) étant définie par un axe de raccordement (16) reliant le lobe de came (10), pour la rotation, à l'arbre d'entraînement intérieur (14).

8. Arbre à cames selon la revendication 3, la roue de synchronisation (48) étant assemblée sur le lobe de came (10), puis déformée afin de le maintenir dans la bonne position relativement au lobe de came (10).
